# EUROPEAN PATENT APPLICATION

(11) **EP 3 745 083 A1**
(43) Date of publication of application: **02.12.2020**
(21) Application number: 20176464.4
(22) Date of filing: 26.05.2020
(51) Int. Cl.: G01B 11/02, G01B 11/28, A22B 5/00, G06T 7/00, G06T 7/62, A01K 29/00

(54) **APPARATUS AND METHOD FOR THE ACQUISITION OF LINEAR, ANGULAR AND SURFACE MEASUREMENTS OF LIVING ANIMAL OR CARCASSES OF SLAUGHTERED ANIMALS**

(30) Priority: 27.05.2019 IT 201900007281
(71) Applicant: West Systems S.r.l., 50126 Firenze (IT)
(72) Inventor: NEGRETTI, Paolo, I-00159 Roma (IT); BIANCONI, Giovanna, I-01027 Montefiascone (Viterbo (IT)
(74) Representative: Carangelo, Pierluigi

(57) **Abstract**

An acquisition apparatus (1), adapted and configured to acquire linear and/or angular and/or surface measurements of living animals, in particular of zoo-technical, sports, zoological interest and of pets or carcasses of slaughtered animals, comprising:
- an acquisition unit (11) adapted to acquire at least one digital image (30) of a living animal or of a half-carcass of a slaughtered animal;
- a processing unit (12) configured to receive or read the acquired digital image (30) and calculate, from the digital image (30), at least one linear and/or angular and/or surface measurement;
- a display unit (13) adapted and configured to display the acquired digital image (30).

The processing unit (12) is adapted and configured to control the display unit (13) so as to display a deformable outline (31) of the animal, or of a portion of animal or of a carcass, superimposed on said acquired digital image (30) and to calculate said at least one measurement based on the shape taken by the deformable outline (31).

## Description

### FIELD OF THE INVENTION

The present invention relates to the technical field of apparatuses and methods for the acquisition of linear and/or angular and/or surface measurements of living animals or of carcasses of slaughtered animals. Such invention applies, for example, to the morphological and dimensional measurment of animals of zoo-technical, sports, zoological interest, and pets.

### BACKGROUND ART

Apparatuses which allow professional operators, such as, for example, evaluators or breeders of animals of zoo-technical or sports interest, to acquire various types of measurements in the field, for example linear, angular or surface measurements of live animals or of carcasses of slaughtered animals, are now starting to spread. These measurements are, for example, acquired so as to assess the morphology, the biological variability, the health state of the animals, or the quality of the carcass of a slaughtered animal, the state of fattening or the weight of an animal, the morphological variations over time of certain animal breeds. The aforesaid apparatuses are particularly useful to measure animals of zoo-technical or sports interest.

International patent application WO2013183073 A1, incorporated herein by reference, describes an apparatus and a method for the SEUROP classification of the conformation of carcasses of slaughtered cattle. In accordance with an advantageous embodiment, the apparatus and method described in the aforesaid patent application also allow a measurement of the fattening state of the bovine.

Some of the known apparatuses allow operators in the sector to acquire measurements in the field in a semi-automatic manner. In particular, in the apparatus described in the aforementioned patent application WO2013183073 A1, it is provided that the operator, by means of a touchscreen, may note down reference points on the images to acquire specific measurements.

Before the aforesaid apparatuses were provided to the operators, the aforesaid measurements or assessments were carried out by hand, according to conventional techniques with measuring instruments; furthermore some assessments were made at a glance by comparing the animals with one or more reference images.

The aforesaid apparatuses, although being useful to obtain more objective measurements with respect to those obtained by means of techniques conventionally used before the introduction of such apparatuses, may still however be improved. In particular, the need is felt to have available an acquisition apparatus which allows a specialized operator to acquire on the field each desired measurement in a faster, easier manner, and at the same time to obtain more precise measurements.

It is the object of the present description to provide an acquisition apparatus and a method which allow to satisfy the aforesaid requirement.

Such object is achieved by means of an acquisition apparatus as defined in general in claim 1. Preferred and advantageous embodiments of the aforesaid apparatus are defined in the accompanying dependent claims. Such object is further achieved by means of an acquisition method as defined in general in claim 15.

The invention will be better understood from the following detailed description of a particular embodiment given by way of explanation and, therefore, not by way of limitation, with reference to the accompanying drawings briefly described in the following paragraph.

### BRIEF DESCRIPTION OF THE DRAWINGS

Figure 1 shows a top axonometric view of a non-limiting embodiment of an acquisition apparatus, adapted and configured to acquire linear and/or angular and/or surface measurements of living animals or of carcasses of slaughtered animals.
Figure 2 shows an axonometric view from below of the acquisition apparatus of Figure 1.
Figure 3 shows a functional block diagram of the acquisition apparatus of Figures 1 and 2.
Figure 4 shows a digital image acquired and displayed by means of the acquisition apparatus of Figures 1-3 on which a deformable outline is superimposed.
Figure 5 shows the deformable outline of Figure 4.
Figure 6 shows a flow chart, given by way of explanation and not by way of limitation, of an acquisition method according to the present invention.
Figure 7 shows a further digital image acquired and displayed by means of the acquisition apparatus of Figures 1-3.
Figure 8 shows a further deformable outline which may be superimposed on the digital image of Figure 7.

### DETAILED DESCRIPTION

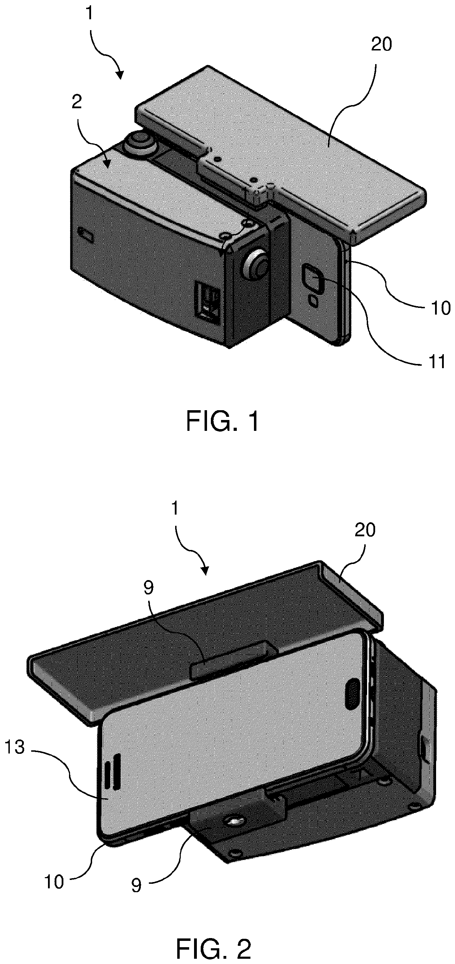

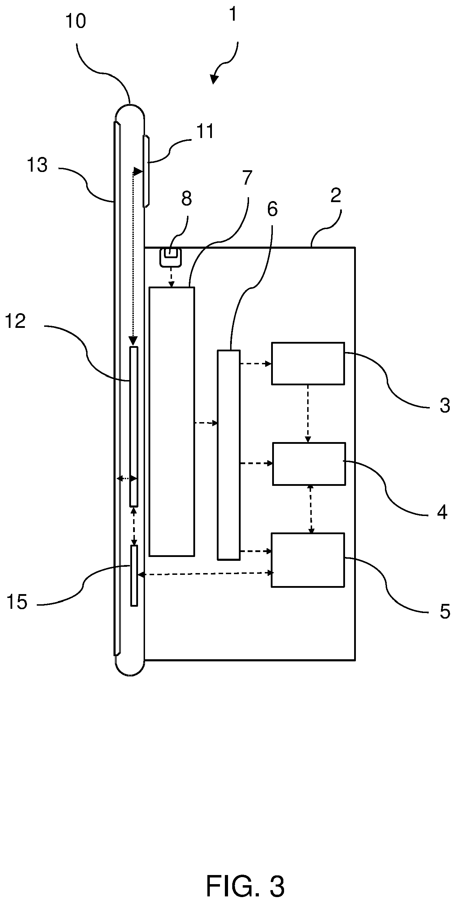

Figures 1-3 show an exemplary and non-limiting embodiment of an acquisition apparatus 1 adapted and configured to acquire linear and/or angular and/or surface measurements of living animals, in particular, of animals of zoo-technical and sports interest, or of carcasses of slaughtered animals. In accordance with an embodiment, the aforesaid animals are quadrupeds, in particular cattle, sheep, goats, pigs or horses.

Preferably the acquisition apparatus 1 is a mobile and, more preferably, handheld acquisition apparatus, so that the user of the apparatus 1 may easily move on the acquisition field while holding the apparatus 1 in their hand, to acquire the desired measurements in real time and in the field. This does not exclude that the acquisition apparatus 1 may be equipped with a stand or be coupled to a stand, for example a tripod.

In the particular embodiment shown in the Figures, without thereby introducing any limitation, the acquisition apparatus 1 is, or comprises, a smartphone 10, for example, a smartphone adapted to store and execute an application program, or "app", for the acquisition of the aforesaid measurements. For example, the aforesaid operating system is Android. In a possible embodiment variant, alternatively to the smartphone 10, the acquisition apparatus 1 may comprise a hardware and software system specially developed for the acquisition of the aforesaid measurements.

The acquisition apparatus 1 comprises a unit for acquiring images 11 adapted to acquire at least one digital image 30 of a living animal or of a half-carcass of a slaughtered animal. For example, the aforesaid image acquisition unit 11 comprises a camera and/or a video camera. In the particular example shown in the accompanying Figures, the image acquisition unit 11 is, or comprises, a video camera and/or a camera integrated in the smartphone 1.

The acquisition apparatus 1 further comprises a storage unit, not shown in the Figures, adapted and configured to store the acquired digital image 30. For example, the storage unit is a storage unit integrated in the smartphone 10 or an external storage unit, such as, for example, an external memory card which may be operatively coupled to the smartphone.

The acquisition apparatus 1 further comprises a processing unit 12 configured to receive, or read, the digital image acquired 30, for example, by the aforesaid storage unit, and to calculate at least one linear and/or angular and/or surface measurement from the acquired digital image 30. In the particular example shown in the accompanying Figures, without thereby introducing any limitation, the processing unit 12 is, or comprises, a processor integrated in the smartphone 1. Said integrated processor is, for example, a System on Chip (SoC) processor of the smartphone. Such system on chip preferably comprises, in addition to the processor, also a graphic controller, one or more memories and input/output interfaces.

The acquisition apparatus 1 further comprises a display unit 13 adapted and configured to display the acquired digital image 30. In accordance with an advantageous embodiment, the display unit 13 is a touchscreen. In the particular example shown in the accompanying Figures, without thereby introducing any limitation, the display unit 13 is, or comprises, the touchscreen integrated in the smartphone 10.

The processing unit 12 is adapted and configured to control the display unit 13 so as to display on the latter a deformable outline 31 of the animal, or of a portion of the animal, superimposed on the acquired digital image 30 and to calculate one or more measurements (for example, linear and/or angular and/or surface measurements) based on the shape taken by said deformable outline 31. For example, if the processing unit 12 is a SoC processor of the smartphone, the processing unit 12 is operatively connected to the display unit 13 by means of the SoC graphic controller. This is equivalent to saying that the processing unit 12 controls the display unit 13 by means of the graphic controller.

In accordance with a particularly advantageous embodiment, the aforementioned deformable outline 31 is deformable so as to change the proportions between different portions of the outline itself, in other words, the aforesaid deformation is not limited to a mere variation in the scale of the entire outline, for example, to a mere enlargement of the entire deformable outline 31.

Preferably, the aforesaid deformable outline 31 is a stylized outline made up of lines which together constitute the external contour of the shape of the animal or of a portion of the animal.

In accordance with an advantageous embodiment, the aforesaid outline 30 may be deformed continuously. In other words, the outline 30 is deformable fluidly and gradually and not discretely.

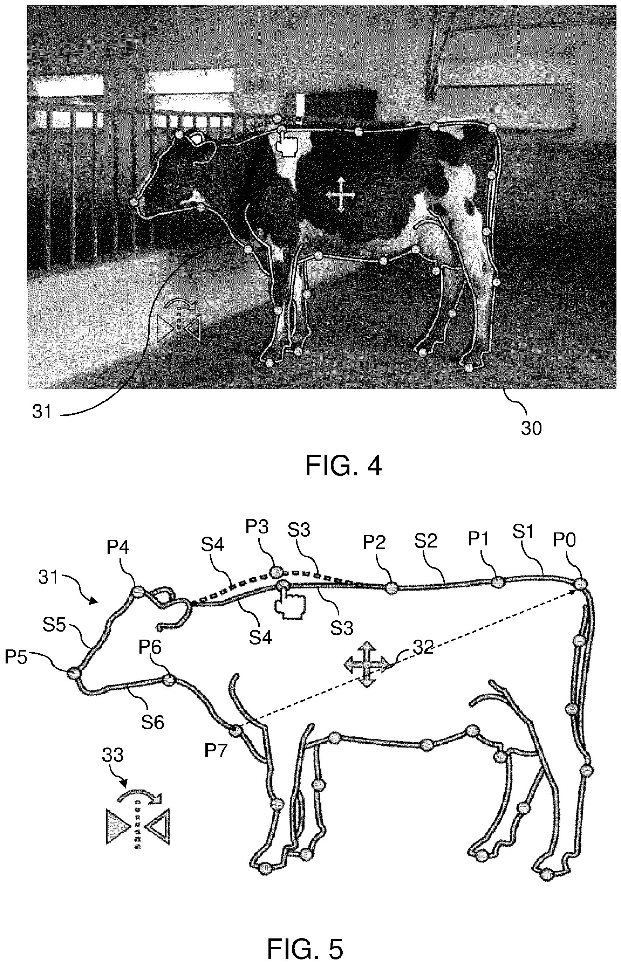

In accordance with a particularly advantageous embodiment, the deformable outline 31 comprises a plurality of deformable outline segments S1-S6. In Figure 5, exclusively given by way of explanation, six outline segments S1-S6 have been marked with respective reference numbers, only for reasons of Figure clarity.

In accordance with a preferred embodiment, the aforesaid plurality of outline segments S1-S6 comprises at least two outline segments, such as, for example, segments S1 and S3, which are deformable independently of each other.

In accordance with a preferred embodiment, the aforesaid plurality of outline segments S1-S6 comprises at least two adjacent outline segments, such as, for example, segments S3 and S4, which are deformable together. This is equivalent to saying that, for example, by deforming segment S3, segment S4 is automatically deformed and vice versa.

In the advantageous embodiment in which the display unit 13 comprises a touchscreen, the deformable outline 31 is conveniently deformable by a user by touching the outline 31 on the touchscreen. Preferably, if the deformable outline 31 comprises a plurality of outline segments S1-S6, each of said outline segments S1-S6 is deformable by applying pressure, for example, tactile pressure, on the segment, and by dragging the segment on the touchscreen. If necessary, the points defining the segments of the outline may be added by the operator.

In accordance with a particularly advantageous embodiment, the deformable outline 31 comprises lines and a plurality of reference points P1-P7 superimposed on the lines and the outline 31 is deformable by moving the position of said reference points P1-P7. For example, the lines are represented by the aforesaid outline segments S1-S6 themselves, and each reference point P1-P7 separates two adjacent outline segments from each other. In accordance with a possible embodiment, the acquisition apparatus 1 is adapted and configured so that a user may dynamically move the reference points P1-P7 by sliding them on the lines to vary the length of two adjacent outline segments, so that, by increasing the length of one of said two outline segments, the length of the other one of the two outline segments is consequently reduced.

In accordance with a particularly advantageous embodiment, the processing unit 12 is adapted and configured to control the display unit 13 so as to display a first active icon 32 as well, preferably superimposed on the digital image 30, which is operable to translate and/or rotate the deformable outline 31 without deforming it, i.e., to rigidly move the position thereof on the display unit 13. Thereby, the user may center the deformable outline 31 on the portion of the acquired digital image 30 in which the animal and/or carcass is shown. In an embodiment variant, said centering is performed by the processing unit 12, in other words, the processing unit 12 is adapted and configured, i.e., it is programmed, to automatically center the deformable outline 31 with respect to the animal or to the portion of animal shown in the acquired digital image 30. In the latter case, the provision of the aforesaid first active icon 32 may also be useful for a correction or active adjustment of the centering of the deformable outline 31 by the user.

In a further advantageous embodiment, the processing unit 12 is adapted and configured to control the display unit 13 so as to display a further active icon 33 as well (in addition or alternatively to the first active icon 32), preferably superimposed on the digital image 30, which is operable to overturn the outline 31 about a vertical axis without deforming it. That is, it allows to adapt the direction in which the deformable outline 31 is shown to the direction taken by the animal in the acquired digital image 30 in a very fast and comfortable manner.

In accordance with a particularly advantageous embodiment, the acquisition apparatus is adapted and configured to acquire the digital image 30 as a calibrated image, i.e. a digital image in which the ratio between pixels and real measurement of the area shown by the pixels is known. In order for this to happen, the acquisition apparatus 1 comprises a distance measuring module 2, which is adapted and configured to measure a distance between the animal or carcass and the acquisition apparatus 1 at the time of the acquisition of the digital image 30.

In accordance with a particularly preferred embodiment, the distance measuring module 2 comprises at least one laser rangefinder 3. For example, in the embodiment in which the acquisition apparatus comprises a smartphone 10, it is advantageous to provide a laser rangefinder 3 external to the smartphone 10 and operationally connected to the latter. In this case, for example, the distance measuring module 2 may be an external module which comprises or contains the laser rangefinder 3. The aforesaid external distance measuring module 2 further preferably comprises a communication module 5 which is adapted and configured to allow a data communication between the external distance measuring module 2 and the smartphone 10. For example, the communication module 5 is a Bluetooth module adapted and configured to interface with a Bluetooth communication module 15 provided on board the smartphone 10. Thereby, it is possible to operatively connect the laser rangefinder 3 to the processing unit 12 of the smartphone 10, so as to communicate to the latter the distance measured by the external distance measuring module 2 and, in particular, by the laser rangefinder 3. This operational connection is also useful for the user to correctly acquire the digital image 30. For example, by showing the distance measured on the display unit 13 in real time, the operator may understand when it is appropriate to acquire the digital image 30. This occurs, for example, when the laser rangefinder 3 is correctly aimed and/or when the distance is stabilized. The latter condition avoids the acquisition of a blurred digital image 30 due to an unwanted movement between the acquisition apparatus 1 and the animal or carcass.

In accordance with a particularly advantageous embodiment, the acquisition apparatus 1 is adapted and configured to display on the display unit 13 a virtual viewfinder adapted to show the user the aiming position of the laser rangefinder 3. Thereby, the user may decide to aim the laser rangefinder 3 on an area of the body of the animal which allows a better measurement of the distance, for example, by choosing to point the laser on a relatively lighter, therefore more reflective, area of the body of the animal, with respect to to a relatively darker area.

The external distance measuring module 2 preferably comprises a control unit 4 of the laser rangefinder 3, for example a microprocessor, adapted to manage the data communication between the laser rangefinder 3 and the processing unit 12. In the example, the control unit 4 of the laser rangefinder 3 is operatively interposed between the laser rangefinder 3 and the communication module 5.

In accordance with a particularly advantageous embodiment, the external distance measuring module 2 further comprises an electric power supply module 6, which, in the example, is adapted and configured to power the laser rangefinder 3, the control unit 4 of the laser rangefinder 3, the communication module 5. Preferably, the external distance measuring module 2 further comprises a rechargeable battery 7 with a charging management system attached. Preferably, the external distance measuring module further comprises an electrical connector 8, for example, a micro USB connector, so as to allow the charging of the battery 7 from an external power source.

In a particularly advantageous embodiment, the external distance measuring module 2 comprises at least one support element 9 of the smartphone. The aforesaid support element 9 comprises, for example, an elastic clamping element having two jaws movable together. For example, one of such jaws is fixed, while the other one of the jaws is movable and an elastic system is provided which tends to bring the movable jaw closer to the fixed jaw. Thereby, the smartphone 10 may be held between the two jaws and may, therefore, be mechanically coupled to the external module 2.

In accordance with a further advantageous embodiment, the external distance measuring module 2 may comprise a sunscreen 20 which allows to limit the exposure of the touchscreen 13 of the smartphone 10 to the sun rays, so as to reduce as much as possible the annoying reflections on the touchscreen 13, which have a negative impact on the clear visibility of the acquired digital image 30 and the associated superimposed deformable outline 31 by the user.

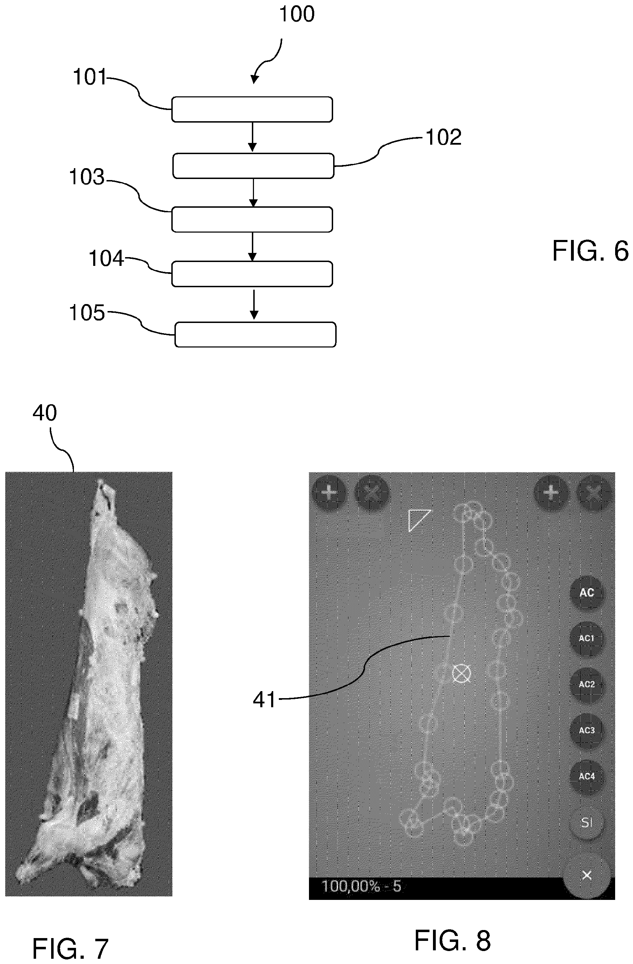

Figure 6 shows a flow chart, given by way of explanation and not by way of limitation, of the acquisition method 100. Such acquisition method 100 may be implemented, for example, by using an acquisition apparatus 1 which, according to a possible exemplary and non-limiting embodiment, is an acquisition apparatus 1 as described above.

The aforesaid method 100 is a method for acquiring linear and/or angular and/or surface measurements of living animals, in particular of zoo-technical and sports interest, or of carcasses of slaughtered animals. The acquisition method 100 comprises the steps of:
- acquiring 102 at least one digital image 30 of a living animal or of a half-carcass of a slaughtered animal;
- displaying 103 the acquired digital image 30 on a display unit 13;
- controlling 104 the display unit 13 so as to display a deformable outline 31 of the animal, or of a portion of animal or of a carcass of an animal, superimposed on said acquired digital image 30;
- processing 105 the acquired digital image 30 to calculate at least one linear and/or angular and/or surface measurement, wherein said measurement is calculated based on the shape taken by said deformable outline 31.

In a particularly advantageous embodiment, the aforesaid method 100 further comprises a step of measuring 101 a distance with respect to said animal or said carcass so as to acquire said digital image 30 as a calibrated image.

Further features of the aforesaid method 100 may be directly derived from the description given above of the acquisition apparatus 1.

**A** non-limiting operation of the acquisition apparatus 1 will be described below.

Once in the field, an operator, such as, for example, an expert and/or an evaluator of cattle breeds, will be able to identify a head, for example a bovine, to be assessed.

After taking position at a certain distance from the bovine, ranging from a few meters even up to a couple of tens of meters, the operator will acquire a digital image of the bovine by means of the smartphone 10. The acquisition apparatus 1 will store the acquired digital image and preferably also the distance between the acquisition apparatus 1 and the bovine at the time of the acquisition of the image. The acquired digital image 30 will be displayed on the display unit 13, i.e., in the example, on the touchscreen, and the deformable outline 31 will be displayed superimposed on the acquired digital image 30. At this point the operator may possibly translate and/or rotate and/or overturn the deformable outline 31 to center it with respect to the portion of acquired digital image 30 in which the bovine is shown. By changing the shape of the deformable outline 31, for example, by acting on the various segments S1-S6 of the outline, the user may adapt the shape of the deformable outline 31 to the real shape of the bovine until obtaining a final shape of the desired outline (called "definitive outline") which, according to the operator, better fits the shape of the bovine shown in the digital image 30. Such definitive outline will be preferably stored in a digital memory, for example, as a digital image, for example, a bitmap image. Thereby, the processing unit 12 may, starting from the spatial coordinates of the pixels of the digital image which define the definitive outline, calculate one or more linear and/or angular and/or surface measurements. For example, by measuring the distance between the pixels defining the outline 31, it may calculate linear measurements. With reference to Figure 5, for example, by calculating the distance between the pixels in the center of the points P0-P7, the processing unit 12 will provide the measurement of the Trunk Length of the bovine.

For example, the processing unit 12 may calculate the area of the definitive outline, and, by means of a suitable formula known in the literature, it may calculate the weight of the bovine. To calculate the weight of the bovine it is possible, for example, that the bovine in the digital image acquired 30 is also viewed from above and in a plan view. This may be obtained by acquiring the digital image 30 from an elevated support, or from an elevated station on which the operator will be positioned, or by mounting the aforesaid acquisition apparatus 1 on board a drone, so that the aforesaid acquisition apparatus 1 is the payload of the drone.

In accordance with a particularly advantageous embodiment the processing unit 12 is adapted and configured to calculate, starting from said at least one linear and/or angular and/or surface measurement, a biological variability index for said animal and to automatically assign a score in a linear morphological assessment scale.

For example, after acquiring the digital image 30 and obtaining the definitive outline, the processing unit 12 may calculate the following measurements starting from the definitive outline (to calculate all of them it may be necessary to acquire more digital images and more definitive outlines, in which the digital images show the bovine from different sides or observation points):
- Stature;
- Body Depth;
- Top Line;
- Rump Length;
- Rump Angle;
- Ischium Structural Width;
- Coxofemoral Positioning;
- Legs Side/Hock angle View;
- Fetlock Height;
- Front Udder Length;
- Rear Udder Attachment Width;
- Rear Udder Attachment Height;
- Udder Depth;
- Udder Balance;
- Teat Length;
- Teat Direction;
- Teat Position.

**The** aforesaid measurements currently represent the official parameters for the so-called linear morphological assessment of dairy cattle. Thereby, for example, by calculating the differences or the ratios between the aforesaid measurements and the measurements of a standard reference bovine, the processing unit 12 may automatically assign a numerical score to the bovine or to parts thereof on an official assessment scale. Currently, such score ranges from 0 to 100.

As it is known, the linear assessment system introduced in the USA in the early 1980s, and soon after adopted all over the world, represented a first step in making morphological assessments comparable at an international level. Such a system is based on three fundamental principles: 1) giving a numerical value to the individual biological characters which, due to the variability thereof, may go from one extreme to the other; 2) including characters which have a potential economic and functional importance; 3) developing a measuring system (scale) which may be applied uniformly for all characters. In recent years a harmonization effort was put in place to try to standardize the assessment criteria in various countries, from the United States to Europe.

Alternatively, or in addition to the assignment of the score on the official scale, in accordance with a particularly advantageous embodiment, the processing unit 12 is configured and programmed to calculate, starting from the definitive outline, a score on an innovative scale, which will be described below on the basis of the calculation by the processing unit 12 of an arccosine function.

The new biological variation measuring system is based on the principle of analyzing the mathematical values of the ratio of the parameters to be assessed (x) with the reference ones defined as ideal (i), existing for each breed subject to linear morphological assessment. We are thus capable of expressing biological variability as a ratio [r = x/i].

The values obtained from such a ratio are then converted into an innovative scale consisting of sexagesimal angles between 0 and 90° from which the Arccosine [ArCos] is then obtained. Each value of this scale is therefore nothing more than the inverse function of the cosine [ArCos] which returns the value of the angle given by the cosine of the value of the ratio [r = x/i] whose maximum is equal to 1, which, in this case, is also the reference value of the biological variation, corresponding to the value 0 of the new scale, in fact [ArCos (1) = 0]. Therefore, the further away from the value 1 of the ratio, going towards 0 (e.g. 144/145 = 0.993; 143/145 = 0.986 126/145 = 0.868....n....0.000), i.e., the greater the biological variation is for a given parameter, the more the value of the new assessment scale tends to grow from 0 to 90. which in fact corresponds to the value 0 of the arccosine [ArCos (0) = 90] . The new assessment scale is perfectly comparable with the official one, thus allowing to assign the final score used today worldwide to the measured biological, and therefore objective, variations.

The arccosine function traces a curve and not a straight line, and therefore the differences in the biological variations do not move in a completely linear manner. However, since the biological variability for a given parameter is delimited by real values which are not very distant (mathematically) from the ideal ones, it is as if only one "section" of the curve described by the arccosine function was used, and in this "section" of the curve the values are arranged in an almost linear manner.

In a further embodiment, with reference to Figures 7 and 8, by means of the acquisition apparatus 1 it is possible to acquire a digital image 40 relating to the half-carcass of a slaughtered bovine. Once the digital image 40 has been acquired, it is possible to show the aforesaid image on the display unit 13 and to show, by means of the display unit 13 itself, a deformable outline 41 of a half-carcass superimposed on the digital image 40. After changing the shape of the aforesaid deformable outline 41 and obtaining a definitive outline by means of the acquisition apparatus 1, it will be possible to assign a SEUROP class and the fattening status SI to the half-carcass after having calculated, by means of the processing unit 12, the parameters AC-AC4 and the surfaces of the lean and fat parts from the definitive outline, based on the teachings of international patent application WO2013183073 A1, incorporated herein by reference.

From the foregoing, it is apparent that an acquisition apparatus and method of the type described above allow to fully achieve the preset objects. Experimental tests have in fact shown that the acquisition of the measurements is particularly quick and fast and at the same time precise.

Without prejudice to the principle of the invention, the embodiments and the construction details may be widely varied with respect to what has been described and shown purely by way of non-limiting example, without thereby departing from the scope of the invention as defined in the accompanying claims.

## Claims

1. An acquisition apparatus (1), adapted and configured to acquire linear and/or angular and/or surface measurements of living animals, in particular of zoo-technical, sports, zoological interest and of pets or carcasses of slaughtered animals, comprising:
- an acquisition unit (11) adapted to acquire at least one digital image (30) of a living animal or of a half-carcass of a slaughtered animal;
- a processing unit (12) configured to receive or read the acquired digital image (30) and calculate, from the digital image (30), at least one linear and/or angular and/or surface measurement;
- a display unit (13) adapted and configured to display the acquired digital image (30);
wherein the processing unit (12) is adapted and configured to control the display unit (13) so as to display a deformable outline (31) of the animal, or of a portion of animal or of a carcass, superimposed on said acquired digital image (30) and to calculate said at least one measurement based on the shape taken by the deformable outline (31).

2. An acquisition apparatus (1) according to claim 1, wherein the deformable outline (31) comprises a plurality of deformable outline segments (S1-S6).

3. An acquisition apparatus (1) according to claim 2, wherein the plurality of outline segments (S1-S6) comprises at least two outline segments (S1, S3) which are deformable independently of each other.

4. An acquisition apparatus (1) according to any one of the preceding claims, wherein the display unit (13) comprises a touchscreen and wherein the deformable outline (31) is deformable by a user touching said outline (31) on the touchscreen.

5. An acquisition apparatus (1) according to claims 2 and 4 or according to claims 3 and 4, wherein each of said outline segments (S1-S6) is deformable by applying a tactile pressure and by dragging the segment on said touchscreen.

6. An acquisition apparatus (1) according to any one of the preceding claims, wherein the deformable outline (31) comprises lines and a plurality of reference points (P0-P7) superimposed on said lines, and wherein the outline (31) is deformable by moving the position of said reference points (P0-P7).

7. An acquisition apparatus (1) according to any one of the preceding claims, wherein said outline (31) is a stylized outline.

8. An acquisition apparatus (1) according to any one of the preceding claims, wherein the processing unit (12) is adapted and configured to control the display unit (13) so as to display a first active icon (32) as well, preferably superimposed on said digital image (30), which is operable to translate and/or rotate said deformable outline (31) without deforming it.

9. An acquisition apparatus (1) according to any one of the preceding claims, wherein the processing unit (12) is adapted and configured to control the display unit (13) so as to display a further active icon (33) as well, preferably superimposed on said digital image (30), which is operable to overturn the outline (31) about a vertical axis without deforming it.

10. An acquisition apparatus (1) according to claim 6, wherein the acquisition apparatus (1) is adapted and configured so that a user may dynamically move the reference points (P1-P7) by sliding them on the lines to vary the length of two adjacent outline segments, so that, by increasing the length of one of said two outline segments, the length of the other one of the two outline segments is consequently reduced.

11. An acquisition apparatus (1) according to any of the preceding claims, further comprising a distance measuring module (2) adapted and configured to measure a distance between the animal or carcass and the acquisition apparatus (1) at the time of acquisition of the digital image (30), wherein the distance measuring module (2) comprises at least one laser rangefinder (3), wherein the acquisition apparatus (1) is adapted and configured to display on the display unit (13) a virtual viewfinder adapted to show the user the aiming position of the laser rangefinder (3).

12. An acquisition apparatus (1) according to claim 11, wherein the acquisition apparatus (1) comprises a smartphone (10) and wherein the distance measuring module (2) is a module external to the smartphone (10) and comprises a communication module adapted and configured to allow a data communication between the distance measuring module and the smartphone (10) and preferably further comprises a support element (9) of the smartphone (10) and/or a sunscreen (20).

13. An acquisition apparatus (1) according to any one of the preceding claims, wherein the processing unit (12) is adapted and configured to calculate, starting from said at least one linear and/or angular and/or surface measurement, a biological variability index for said animal and to automatically assign a score in a linear morphological assessment scale.

14. An acquisition apparatus according to claim 13, wherein said score is assigned by the processing unit (12) on the basis of a calculation of an arccosine function.

15. A method (100) for acquiring linear and/or angular and/or surface measurements of living animals, in particular of zoo-technical and sports interest, or of carcasses of slaughtered animals, comprising the steps of:
- acquiring (102) at least one digital image (30) of a living animal or of a half-carcass of a slaughtered animal;
- displaying (103) the acquired digital image (30) on a display unit (13);
- controlling (104) the display unit (13) so as to display a deformable outline (31) of the animal, or of a portion of animal or of a carcass, superimposed on said acquired digital image (30);
- processing (105) the acquired digital image (30) to calculate at least one linear and/or angular and/or surface measurement, wherein said measurement is calculated based on the shape taken by said deformable outline (31).
